(19) Europäisches Patentamt
European Patent Office
Office européen des brevets

(11) EP 0 843 646 B1

# (12) EUROPÄISCHE PATENTSCHRIFT

(45) Veröffentlichungstag und Bekanntmachung des Hinweises auf die Patenterteilung:
**06.11.2002 Patentblatt 2002/45**

(21) Anmeldenummer: **96927712.8**

(22) Anmeldetag: **09.08.1996**

(51) Int Cl.[7]: **C01B 11/02**

(86) Internationale Anmeldenummer:
**PCT/EP96/03543**

(87) Internationale Veröffentlichungsnummer:
**WO 97/006098 (20.02.1997 Gazette 1997/09)**

(54) **VERFAHREN ZUR HERSTELLUNG WÄSSRIGER CHLORDIOXID-LÖSUNGEN**

METHOD OF PREPARING AQUEOUS CHLORINE DIOXIDE SOLUTIONS

PROCEDE DE PREPARATION DE SOLUTIONS AQUEUSES DE DIOXYDE DE CHLORE

(84) Benannte Vertragsstaaten:
**AT BE CH DE DK ES FI FR GB GR IE IT LI LU MC NL PT SE**

(30) Priorität: **10.08.1995 DE 19529504**

(43) Veröffentlichungstag der Anmeldung:
**27.05.1998 Patentblatt 1998/22**

(73) Patentinhaber: **RIMPLER, Manfred
D-30900 Wedemark (DE)**

(72) Erfinder:
- **RIMPLER, Manfred
D-30900 Wedemark (DE)**
- **KÜKE, Fritz
D-30629 Hannover (DE)**
- **RIMPLER, Marcus
D-31174 Schellerten/Ottbergen (DE)**

(74) Vertreter:
**Hagemann, Heinrich, Dr.rer.nat., Dipl.-Chem. et al
Patentanwälte
Hagemann, Braun & Held,
Postfach 86 03 29
81630 München (DE)**

(56) Entgegenhaltungen:
**EP-A- 0 347 320**
**WO-A-96/33947**
**DE-A- 2 730 883**
**FR-A- 952 177**

- **DATABASE WPI Week 7748 Derwent Publications Ltd., London, GB; AN 85304 XP002017865 & JP 52 123 976 A (HODOGAYA CHEM IND KK) , 18.Oktober 1977**
- **ULLMANN: 'Ulmanns Encyklopädie der technischen Chemie, 4. Auflage, Bd. 9, Seiten 551-553', 1975, VERLAG CHEMIE**
- **GORDON G. ET AL.: 'The Chemistry of Chlorine Dioxide' PROGRESS INORGANIC CHEMISTRY Bd. 15, 1972, Seiten 200 - 209**
- **WHITE J.F. ET AL.: 'Chemistry of chlorites' INDUSTRIAL AND ENGINEERING CHEMISTRY Bd. 34, Nr. 7, 1942, Seiten 782 - 792**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 843 646 B1

## Beschreibung

Die Erfindung betrifft ein Verfahren zur Herstellung von wäßrigen Chlordioxid-Lösungen durch Oxidation von Chlorit mit Oxosäuren und/oder Oxosäure-Anionen geeigneten Redoxpotentials in einem gepufferten wäßrigen Medium.

Zahlreiche Versuche wurden bis heute ohne ein zufriedenstellendes Ergebnis unternommen, Legionellen in Warmwasserkreisläufen abzutöten, um das Gefährdungspotential zu mindern. Weiterhin finden sich in industriellen Kühlkreisläufen Rahmenbedingungen, die ein bakterielles Wachstum begünstigen und an den Oberflächen der Transportleitungen zu einem Biofilm führen, der bislang mittels biostatischer Mittel bekämpft wird. Dazu werden beispielsweise Isothiazolone, Thiocyanate, quaternäre Ammoniumverbindungen und chlorhaltige Verbindungen genutzt. Ein großer Nachteil dieser biostatischen Mittel besteht darin, daß das Kühlwasser aufgrund der hohen Einsatzmengen oft über den Grenzwerten liegende CSB/BSB-Werte aufweist. Tatsächlich erweist sich nur eine Temperaturerhöhung auf ca. 73°C und die Steigerung des Flußvolumens als geeignet, die Legionellen in Wasserkreisläufen abzutöten. Es ist allerdings zu befürchten, daß nach einer gewissen Zeit aus dem Biofilm und den Verkrustungen des Leitungssystems, insbesondere aus sogenannten Totsträngen, die nicht abgetöteten Legionellen sich wieder vermehren und das System erneut nachhaltig verseuchen. In letzter Zeit wurden deshalb nichtionogene Phosphonsäuren mit Wasserstoffperoxid (EP 0 540 772 A1) oder Grapefruit-Samenextrakt (EO 0 602 891 A1) zur Legionellenbekämpfung vorgeschlagen. Keines dieser Verfahren hat sich jedoch durchsetzen können.

Für die aufgezählten Anwendungsgebiete sind wäßrige Chlordioxid-Lösungen aussichtsreiche Kandidaten. Die bekannten Verfahren zur technischen Herstellung wäßriger Chlordioxid-Lösungen weisen jedoch gravierende Nachteile auf, die einem Einsatz der danach hergestellten Chlordioxid-Lösungen im Trinkwasser- und verwandten Bereichen entgegenstehen.

Nach dem Verfahren der DE-PS 27 28 170 werden 7 bis 21 Gew.-Teile Chlorit, 7,5 bis 22,5 Gew.-Teile Hypochlorit und 0,5 bis 1,5 Gew.-Teile Carbonat in der angegebenen Reihenfolge in 35 bis 105 Gew.-Teilen Wasser gelöst. Zur Einstellung eines schwach alkalischen pH-Wertes werden 7,5 bis 22,5 Gew.-Teile verdünnte anorganische oder organische Säure hinzugegeben. Vorzugsweise wird vorher ein Stabilisator eingemischt, insbesondere in Form eines Peroxids.

Nach den Angaben der DE-AS 27 30 883 wird eine wäßrige Chlordioxid-Lösung durch Ansäuern einer Chlorit-Lösung auf einen pH-Wert von etwa 4 und anschließendes Anheben des pH-Wertes auf etwa 7,0 bis 7,2 durch Zugabe eines wasserlöslichen Metallhydroxids hergestellt. Darauf folgt die Zugabe von Carbonat. Die Lehre nach der DE-AS 27 30 883 soll den Vorteil bieten, daß die wäßrige Chlordioxid-Lösung allein durch das Natriumcarbonat stabil bleibt, so daß auf zusätzliche Stabilisatoren in Form von beispielsweise Peroxiden verzichtet werden kann. Die stabilisierte Chlordioxid-Lösung soll über große Zeiträume, nämlich Monate und Jahre, lagerfähig und insbesondere zur Trinkwasseraufbereitung geeignet sein.

Im Sinne der beiden oben dargestellten Verfahrenslehren dient das Carbonat dazu, eine Pufferung im basischen Bereich zu gewährleisten. Die Einverleibung des im alkalischen stabilisierenden Carbonats führt jedoch zu einem hohen pH-Wert, der aus verschiedenen Gründen unerwünscht ist: Ein hoher pH-Wert begünstigt die Rückbildung von Chlorit-Ionen, so daß die bekannten Chlordioxid-Lösungen stets einen unerwünschten Anteil an Chlorit-Ionen enthalten. Im alkalischen Bereich kann sich zudem auf verschiedene Reaktionsweisen hochtoxisches und daher unerwünschtes Chlorat bilden. So kann beim Mischen von alkalischen Hypochlorit- und Chlorit-Lösungen die Oxidation des Chlorits über die Oxidationsstufe des Chlordioxids hinaus zu Chlorat führen. Außerdem neigt Chlordioxid im alkalischen Bereich zur Disproportionierung in Chlorat und das Nebenprodukt Chlorit.

Auch das Verfahren nach der DE-PS 34 03 631 stellt darauf ab, ein schwach alkalisches System herzustellen, das auf eine Chlorit-Lösung zurückgeht. Es ist auf die Herstellung einer durch eine Peroxid-Verbindung stabilisierten, modifizierten, alkalisch eingestellten wäßrigen "Chlorit"-Lösung ausgerichtet. Hier wird eine Sulfationen enthaltende wäßrige Lösung eines pH-Wertes von 3 oder weniger mit einer darin stabilen Peroxid-Verbindung versetzt, wobei sich im Endprodukt eine 0,001 bis 0,1 molare Konzentration an Peroxid-Verbindung einstellt. Diese Lösung wird mit einer wäßrigen alkalischen Chlorit-Lösung in einer solchen Menge vermischt, daß sich ein pH-Wert von über 7,0 einstellt, insbesondere zwischen 7,5 und 8,0. Vorzugsweise wird dem erhaltenen Endprodukt ein wasserlösliches Phosphat zugegeben, wobei aufgrund der dritten Dissoziationsstufe der Orthophosphorsäure Pufferwirkung auftritt. Hierdurch wird die Forderung der Einhaltung eines pH-Wertes von mehr als 7 erfüllt.

Wenngleich den oben beschriebenen bekannten Verfahren zugestanden werden muß, daß sie in Einzelfällen zu vorteilhaften Anwendungen führen, so haben spätere wissenschaftliche Überprüfungen gezeigt, daß die damit in Zusammenhang gebrachten chemischen Bezeichnungen unzutreffend sind und darüber hinaus Verbesserungen anzustreben wären. Bezüglich der unzutreffenden Formeln sei verwiesen auf M. Rimpler, W. Regnet, D. Pacik "Balneozoon und Hydroxan", "Die Anwendung von halogenhaltigen Sauerstoffkomplexen für die Balneologie und den Schwimmbadbereich", Forum Städte-Hygiene 43 (1992) Sept./Okt., S. 226-230. In diesem Artikel wird gezeigt, daß nach den bekannten Verfahren gebildetes Chlordioxid in Gegenwart von Chlorit-Ionen in einen Charge-Transfer-Kom-

plex der Formel $Cl_2O_4^-$ überführt wird, der sich im alkalischen Bereich durch Sauerstoff zum Tetrachlorodecaoxid-Anion umsetzt. Dieses Anion kann auch aus Chlordioxid durch Einwirkung eines Oxidationsmittels, wie Wasserstoffperoxid, gebildet werden. Der Nachteil der durch die bekannten Verfahren erhaltenen Erzeugnisse besteht darin, daß sie sämtlich Chlorit enthalten und dieses bei der Anwendung, beispielsweise im Trinkwasserbereich, nachteiligerweise freigesetzt wird. Hierbei ist insbesondere bei der Aufbereitung von Trinkwasser zu bedenken, daß gesetzliche Grenzwerte für Chlorit nicht überschritten werden dürfen. Der derzeit geltende Höchstwert beträgt 0,2 mg Chlorit/l.

Unter der Bezeichnung Oxoferin® ist ein im alkalischen Medium stabilisierter aktivierter Sauerstoff, der in einer Matrix aus Chlorit-Ionen eingeschlossen ist, bekannt. Der stabilisierte aktivierte Sauerstoff liegt in Form einer Lösung vor. Ein diesen aktivierten Sauerstoff enthaltendes Arzneimittel kann vorteilhaft zur Behandlung von Hautschäden oder Wundheilungsstörungen eingesetzt werden. Dessen Herstellung wird in der EP-A-0 093 875 beschrieben.

Beim Olin-System wird Chlorbleichlauge und eine Chlorit-Lösung bei einem pH-Wert von 3,5 bis 4 umgesetzt. Zur pH-Werteinstellung wird Schwefelsäure verwendet. Kommerziell erhältlich ist dieses System als Modell 350 Dioxolin. Dieses Verfahren wird in einem einzigen Mischvorgang durchgeführt, was zu unkontrollierten Abläufen und komplexen Mischungen führt. Es zeigt ferner den Nachteil, daß durch die Schwefelsäure keine Pufferung gegeben ist.

Wie von W.J. Masschelein erstmals in Trib. Eau 42(542); 1990; S. 49-52 beschrieben, hat Chlordioxid eine abtötende Wirkung auf Legionellen. Das dort für technische Zwekke eingesetzte Chlordioxid wurde aus Chlorit und Acetanhydrid gewonnen. Ein solches Gemisch ist nach Verbrauch des starken Oxidationsmittels Chlordioxid aufgrund des enthaltenen Acetat-Kohlenstoffkörpers wiederum Nahrungsgrundlage für besonders in Trinkwassersystemen unerwünschte andere Mikroorganismen. Diese Tatsache steht deshalb dem Einsatz eines solchen wäßrigen Chlordioxidgemisches im Lebensmittel- und Trinkwasserbereich entgegen, zumal der Zusatz von Organika zu Trinkwasser in vielen Ländern (z.B. in der Bundesrepublik Deutschland (TVO)) inzwischen verboten ist.

Neben den beschriebenen Verfahren zur Chlordioxid-Herstellung durch Oxidation bzw. Disproportionierung von Chlorit kann Chlordioxid auch durch Reduktion von Chloraten gewonnen werden. Ein derartiges Verfahren ist der Mathieson- oder Schwefeldioxidprozeß. Hierbei handelt es sich um ein Gegenstromverfahren, bei dem am Kopf eines Reaktionsbehälters eine Lösung von Natriumchlorat mit Schwefelsäure vermischt und am Boden ein Luft/Schwefeldioxidgemisch eingeblasen wird. Am Kopf dieses Reaktors kann ein Luft/Chlordioxidgemisch entnommen werden. Dieses Gemisch enthält auch Anteile von Chlor.

Um etwaig entstandenes Chlor zu reduzieren, wird mit einem Überschuß an Schwefeldioxid gearbeitet. Auch die Zugabe von Chloridionen erhöht die Ausbeute an Chlordioxid. Ein derartiges Verfahren ist z. B. in der WO 90/05698 niedergelegt.

Der Solvay- oder Methanol Prozeß verwendet zur Reduktion des Chlorats Methanol Da die Reaktionsgeschwindigkeit dieses Prozeßes unter der des Mathieson-Prozeßes liegt, muß bei erhöhter Temperatur gearbeitet werden. Ein derartiges Verfahren ist z.B. in der EP 0 357 198 beschrieben.

Chlorat kann auch durch Chlorid zu Chlordioxid reduziert werden. Das entstehende Chlordioxid ist stets mit Chlorgas verunreinigt. Falls diese Verunreinigung unerwünscht ist, wird das Chlordioxid durch eine wäßrige Lösung absorbiert und somit vom Chlor getrennt. Ein derartiges Verfahren ist in der EP 0 106 503 beschrieben.

Ferner beschreibt die EP 0 347 320 ein Verfahren zur Chlordioxid-Herstellung durch Reaktion einer wäßrigen Chloritlösung mit einer wäßrigen Hypochloritlösung. Hierbei wird entweder zu einer Alkalimetallchloritlösung eine Alkalihypochloritlösung gegeben und die erhaltene Lösung mit einer organischen oder anorganischen Säure auf pH 7 bis 9 bzw. 2 bis 5,6 eingestellt oder die Alkalimetallchloritlösung wird mit der organischen oder anorganischen Säure auf pH 7 bis 9 bzw. 2 bis 5,6 eingestellt und die erhaltene Lösung einer Alkalimetallhypochloritlösung zugegeben. Durch diese Verfahrensführung entstehen jedoch unerwünschte Nebenprodukte: Bei der ersten Variante der EP-A-0 347 320, bei der zunächst eine Hypochloritanionen und Chloritanionen enthaltende Lösung hergestellt wird, und diese im Anschluß angesäuert wird, ist bis zum Moment der Säurezugabe die Chloratbildung die Hauptreaktion. Die Zugabe der Säure zum Alkalimetallchlorit nach der zweiten Variante führt zur Bildung der freien chlorigen Säure, die sich vor der angestrebten Reaktion mit dem Hypochlorit unter Autooxidation und Bildung von Chlorat zersetzt.

Demzufolge wird eine Chloritdioxidlösung erzeugt, die zur Trinkwasserdesinfektion nicht geeignet ist, da enthaltene toxische Stoffe, wie Chlorit und Chlorat, die Grenzwerte der Trinkwasserverordnung weit übersteigen.

WO-A-96/33947 ist Stand der Technik nach Artikel 54(3) EPÜ. Dieses Dokument offenbart die Herstellung einer wäßrigen Chlordioxidlösung, wobei eine Lösung von Chlorit mit einem pH-Wert oberhalb 9,5 mit einer Lösung eines halogen freien Oxidationsmittels versetzt wird. Der pH der Reaktionslösung soll zwischen 5,5 und 9,5 liegen. Es handelt sich in diesem Dokument um ein Batchverfahren.

Der Erfindung liegt die Aufgabe zugrunde, das eingangs bezeichnete Verfahren so weiterzubilden, daß wäßrige Chlorit-Lösungen bei einfacher und sicherer Verfahrensführung durch geeignete Wahl der Konzentration der Ausgangsmaterialien zu einer gewünschten Endkonzentration an Chlordioxid im Verfahrenserzeugnis umgesetzt werden. Dabei soll unerwünschtes Chorit weitgehend augeschlossen sein, so daß der Höchstwert an Chlorit pro Liter nach der geltenden Trinkwasserverordnung (0,2 mg Chlorit/l) sicher unterschritten werden kann. Auch soll eine Verunreinigung mit nachteiligen Organika ausgeschlossen sein.

Erfindungsgemäß wird diese Aufgabe dadurch gelöst, daß man eine saure wäßrige Lösung A mit einem pH-Wert von etwa 5 oder weniger, die die Oxosäuren und/oder Oxosäure-Anionen enthält, herstellt und die saure wäßrige Lösung A zur Bildung von Chlordioxid mit einer wäßrigen Chlorit-Lösung B mischt, wobei sich in der Reaktionsmischung ein pH-Wert von unter 6,95 einstellt, der durch ein einverleibtes pufferndes System stabilisiert ist, wobei als Oxosäuren und/oder Oxosäure-Anionen Hypochlorige Säure/Hypochlorit verwendet werden und/oder die Reaktionsmischung zur Oxidation des Chlorits mit einem kontinuierlich geführten Reaktionsreaktor durchgeführt wird. In diesem Bereich sind wäßrige Chlordioxid-Lösungen besonders stabil.

Für die Zwecke der Erfindung soll die Bezeichnung "Oxosäuren und/oder Oxosäure-Anionen" ein System von miteinander im Protolysegleichgewicht stehenden Spezies bedeuten, die von Oxosäuren (Elementsauerstoffsäuren) abgeleitet sind, deren Redoxpotential (Oxidationspotential) zur Oxidation von Chlorit zu Chlordioxid geeignet ist. Das Standard-Redoxpotential beträgt für gasförmiges $ClO_2$ 1,15 V und für in Wasser gelöstes $ClO_2$ 0,95V. Die verwendete Oxosäure muß daher unter den Reaktionsbedingungen ein Redoxpotential aufweisen, das in dieser Größenordnung oder darüber liegt. Zur Definition des Redoxpotentials sei verwiesen auf Römpp Chemie-Lexikon, Franckh'sche Verlagshandlung, Stuttgart, 8. Aufl., 1985, S. 3522. Im folgenden soll die Bezeichnung Oxosäure auch die damit im Protolysegleichgewicht stehenden Oxosäure-Anionen umfassen, soweit nicht aus dem Zusammenhang etwas anderes hervorgeht. Die Oxosäure ist erfindungsgemäß Hypochlorige Säure.

Wesentliches Kennzeichen der Erfindung ist es, eine saure wäßrige Lösung von Hypochloriger Säure mit einem pH-Wert von etwa 5 oder weniger herzustellen. Vorzugsweise wird der pH-Wert der sauren wäßrigen Lösung A auf etwa 1 bis etwa 5, insbesondere 1,5 bis 3,5, eingestellt. Diese saure wäßrige Lösung A wird anschließend mit einer wäßrigen Chlorit-Lösung B vermischt. Die angesprochene Lösung A muß hinreichend sauer sein, damit sich in der Reaktionsmischung ein pH-Wert von unter 6,95 einstellt. Der pH-Wert von unter 6,95 muß durch ein einverleibtes pufferndes System stabilisiert sein. Die Einverleibung des angesprochen Puffersystems dient in erster Linie dazu, ein Abgleiten des pH-Wertes auf Werte von über 6,95 zu verhindern. Diese Gefahr ist z.B. bei der Verwendung von kalkhaltigem Leitungswasser gegeben. Wird das Reaktionssystem nämlich in den neutralen oder gar alkalischen Bereich überführt, dann stellen sich die bereits angesprochenen Nachteile bzw. unerwünschte Effekte ein. So ist die Oxidationskraft der Hypochlorigen Säure im Alkalischen weniger stark ausgeprägt und es besteht überdies die Neigung zu Disproportionierungsreaktionen, wobei u.a. auch Chlorat entstehen kann. Andererseits muß verhindert werden, daß der pH-Wert der Reaktionsmischung zu niedrig liegt. Als unterer Grenzwert läßt sich ein Wert von etwa pH 2 angeben. Unterhalb dieses Wertes kann es nach folgender Gleichung zu Chloratbildung kommen:

$$4ClO_2^- + 2H^+ \rightarrow Cl^- + 2ClO_2 + ClO_3^- + H_2O$$

Für die Einhaltung dieses pH-Bereichs kann es im Einzelfall erforderlich sein, zwei verschiedene Puffersysteme einzusetzen.

Bei der Einverleibung des puffernden Systems sind Modifikationen möglich. So kann beispielsweise eine angesäuerte Hypochlorit-Lösung mit einer wäßrigen Chlorit-Lösung unter gleichzeitiger Einverleibung des puffernden Systems gemischt werden. Alternativ und bevorzugt wird der sauren wäßrigen Lösung A ein pufferndes System einverleibt. Das puffernde System ist vorzugsweise eine schwache Säure. Schwache Säuren im Sinne der Erfindung sind durch einen $pK_s$-Wert im Bereich von etwa 1 bis 9 gekennzeichnet. Schwache Säuren im Sinne der Erfindung sind auch mehrprotonige Säuren, wenn einer ihrer $pK_s$-Werte in den genannten Bereich fällt.

Die saure wäßrige Lösung A kann durch die eingesetzte Oxosäure bereits selbst hinreichend sauer sein, so daß weiterer Säurezusatz entfallen kann. Ist die eingesetzte Oxosäure zu schwach bzw. wird von Oxosäure-Anionen ausgegangen, so ist es notwendig, zur Ansäuerung eine Fremdsäure zuzusetzen. Bei der Wahl der Säure zu Ansäuerung unterliegt die Erfindung keinen besonderen Einschränkungen. Es kann sich hierbei um starke oder schwache Säuren handeln. Als Beispiele sind Salzsäure, Schwefelsäure, Essigsäure, Phosphorsäure oder aber auch geeignete Lewis-Säuren zu nennen.

Der Einsatz von schwachen Säuren ist von besonderem Vorteil, da sie nach Teilneutralisation durch die alkalische Chlorit-Lösung B gleichzeitig die Funktion eines Puffersystems im Reaktionssystem erfüllen. Besonders bevorzugt ist Orthophosphorsäure. Durch geeignete Wahl der Phosphorsäuremenge wird erreicht, daß im Reaktionsgemisch eine Mischung von primärem und sekundärem Phophat vorliegt, die im pH-Gebiet um 6,92 oder darunter puffert.

Von besonderem Vorteil ist es im Rahmen der Erfindung, wenn eine wäßrige Lösung von Hypochloriger Säure durch Ansäuern einer wäßrigen Lösung beispielsweise eines Alkali- oder Erdalkalihypochlorits hergestellt wird. Auch in diesem Zusammenhang entfaltet Phosphorsäure eine vorteilhafte Wirkung, da sie nämlich in ihrer ersten Dissoziationsstufe eine mittelstarke Säure mit einem $pK_s$-Wert von 1,96 ist. Diese Stufe gewährleistet insbesondere innerhalb der sauren wäßrigen Lösung A deren Pufferung im pH-Bereich um 2. Beim Mischen mit der alkalischen wäßrigen Chlorit-Lösung bewirkt die Phosphorsäure aufgrund der geeigneten Lage ihrer zweiten Dissoziationskonstante die erfindungsgemäße Pufferung bei einem Wert von unterhalb 6,95. Wird eine andere Säure herangezogen, dann muß

gegebenenfalls ein zusätzliches Puffersystem einbezogen werden, das zur Stabilisierung des sich in der Reaktionsmischung einstellenden pH-Wertes von unter 6,95 geeignet ist. Geeignete Puffersysteme sind beispielsweise in D.D. Perrin und B. Dempsey, Buffers for pH and Metal Ion Control, Chapman and Hall Ltd., London, 1. Aufl. 1974, beschrieben.

Wenn im Rahmen der Erfindung von "Chlorit"-Lösung gesprochen wird, dann unterliegt der Fachmann hier keinen wesentlichen Einschränkungen. Vorzugsweise handelt es sich um Alkali- und/oder Erdalkalichlorite, insbesondere um die Natrium-, Kalium- und Calciumchlorite.

Im Rahmen der Erfindung wird ausdrücklich von Umsetzung gesprochen. Dies soll so verstanden werden, daß eine weitgehend quantitative stöchiometrische Umsetzung von Chlorit mit Oxosäure erfolgt, was bei einem auf Redox-Äquivalente bezogenen molaren Verhältnis von (1,1 bis 0,9):1, vorzugsweise 1:1, gewährleistet ist. Unter einer auf Redox-Äquivalente bezogenen Einheit wird der hypothetische Bruchteil der Oxosäure verstanden, der zur Aufnahme eines Elektrons befähigt ist. Die Umsetzung von Chlorit mit Hypochloriger Säure erfolgt somit im quantitativen Rahmen von (1,8 bis 2,2):1, vorzugsweise 2:1. In diesem Bereich werden, wenn mit dem üblichen Verfahren des Standes Technik verglichen wird, im Trink- und Badewasserbereich akzeptable Ergebnisse erzielt. Insbesondere würde es dem Verfahrensziel nicht schaden, wenn gegenüber dem exakten stöchiometrischen Verhältnis ein geringfügiger Überschuß an Hypochloriger Säure vorliegt. Zur Lösung der Aufgabe ist es vorteilhaft, wenn dem jeweiligen Reaktor zur Umsetzung mit der Chlorit-Lösung eine Lösung A, deren Konzentration an Hypochloriger Säure genau bekannt ist, zugeführt wird. Dabei bietet sich insbesondere die verzögerungsfreie Bestimmung der Konzentration an Hypochloriger Säure durch Messen des Redox-Potentials an. Mittels eines Redox-Meßsystems werden Spannungswerte in mV ermittelt, die über die Nernst-Gleichung unmittelbar die vorliegende Konzentration an Hypochloriger Säure liefern. Der abgelesene Wert in mV entspricht hierbei einer festgesetzten Konzentration. Diese Konzentration ihrerseits wird im Rahmen der Erfindung genutzt, um die Mengen bzw. Konzentrationen von Lösung A und Lösung B entsprechend abzugleichen, z.B. bei gegebenem Einlauf der wäßrigen Chlorit-Lösung in das Reaktorsystem die exakt angepaßte bzw. gewünschte Menge an Hypochloriger Säure vorhalten zu können.

Das erfindungsgemäße Verfahren läßt sich in beliebigen Reaktionsreaktoren durchführen. Dabei kann es sich um Reaktoren für den chargenweisen (absatzweisen) und den kontinuierlichen Betrieb handeln. So sind homogene, stationäre Rührkessel, Rührkesselkaskaden und auch Reaktionsrohre bzw. Strömungsrohre geeignet. Letztere ermöglichen den vorteilhaften kontinuierlichen Betrieb. Insbesondere in Strömungsrohren muß es allerdings gewährleistet sein, daß sich darin turbulente Verhältnisse einstellen, wobei die Reynolds-Zahl oberhalb 2.300 liegen muß. Bezüglich der Reynolds-Zahl sei verwiesen auf Römpp Chemielexikon, 9. Aufl., Bd. 5, 1992, S. 3861/3862. Die Einstellung der turbulenten Verhältnisse kann darin durch Einbau turbulenzerzeugender Elemente, wie insbesondere von Raschig-Ringen, problemlos erreicht werden. Darüber hinaus ist es selbstverständlich, daß für die Umsetzung in der Reaktionsmischung eine ausreichend lange Reaktionszeit eingehalten werden muß. Zu deren Gewährleistung läßt sich eine Bodenstein-Zahl von 0 bis etwa 500 angeben. Besonders bevorzugt ist es, wenn diese im Reaktionssystem zwischen 5 und 40 liegt. Einzelheiten zu der Bodenstein-Zahl ergeben sich aus E. Fitzer, W. Fritz "Technische Chemie", "Eine Einführung in die Chemische Reaktionstechnik", 2. Aufl., Springer-Verlag 1982, S. 343 bis 352, insbesondere S. 346.

Insbesondere im Hinblick auf den Einsatz der erfindungsgemäß erhaltenenen Chlordioxid-Lösung zur Aufarbeitung von Trinkwasser ist es von Vorteil, dieser eine Hypochlorit-Lösung, insbesondere eine Natriumhypochlorit-Lösung, zur neuerlichen Bildung von Hypochloriger Säure zuzusetzen. Hierdurch wird bei der Anwendung die mögliche Bildung von Chlorit-Ionen zurückgedrängt bzw. ausgeschlossen. Durch den Zusatz von Hypochloriger Säure wird durch Redoxreaktion gebildetes Chlorit sofort wieder in Chlordioxid überführt, so daß die Wirkung über einen längeren Zeitraum gegeben ist. Die maximal erreichbare Chlorit-Konzentration läßt sich durch die anfänglich gewählte Chlordioxid-Konzentration begrenzen, so daß sich die für Trinkwasser maximal zulässige Chlorit-Konzentration in einfacher Weise einhalten läßt.

Die Kombination von Hypochloriger Säure und Chlordioxid-Lösung führt zu einem synergistischen Effekt, wodurch die Anwendungssicherheit des Verfahrenserzeugnisses und die Wirksamkeit zur hygienischen Sicherstellung von Trinkwasser optimiert wird.

Hierbei nutzt die Erfindung gezielt die vorteilhafte Abtötungskinetik, die durch die synergistische Wirkung von Chlordioxid und Hypochloriger Säure bei der Abtötung von Bakterien erreicht wird. Während das Chlordioxid offensichtlich den Lipidanteil der Bakterienmembran besser angreift und schädigt, wird das Ergebnis durch die Hypochlorige Säure nachhaltig unterstützt. Dieses bietet den besonderen Vorteil der wirksamen Vernichtung von Legionella Pneumophila, die für die Legionellose verantwortlich sind.

Anhand der beiliegenden Figur soll beispielhaft eine Vorrichtung zur Durchführung des erfindungsgemäßen Verfahrens geschildert werden, mit der besondere Vorteile verbunden sind. Die Vorrichtung weist einen vertikal von oben nach unten durchströmten Strömungsrohrreaktor auf, der mit turbulenzerzeugenden Elementen gefüllt ist. Im einzelnen bedeuten bei einer bevorzugten Ausgestaltung: 1 = Wasserzulauf, 2 = Dosierung Phosphorsäure, 3 = Dosierung Chlorbleichlauge, 4 = Redoxelektrode, 5 = Dosierung Chlorit-Lösung, 6 = Strömungsrohrreaktor mit Raschig-Ringen, 7 = Dosierung Chlorbleichlauge und 8 = Vorratsbehälter.

Mit der vorliegenden Erfindung sind vielfältige Vorteile verbunden: Es läßt sich eine stabile, gepufferte wäßrige Chlordioxid-Lösung auf technisch einfache Weise unter Nutzung beispielsweise eines Strömungsrohrreaktors herstellen. Man kann hierzu von handelsüblichen Alkalihypochloriten und Alkalichloriten ausgehen. Die Lösung des Alkalichlorits wird vorteilhafterweise mit Phosphorsäure angesäuert, durch die gleichzeitig das Puffersystem $H_2PO_4^-/HPO_4^{2-}$ eingeführt wird, das die fertige Reaktionsmischung auf einem pH-Wert von unter 6,95 stabilisiert. Es lassen sich jedoch auch andere Säuren einsetzen, wobei gegebenenfalls ein externes Puffersystem zugesetzt werden muß, das in etwa in dem gleichen Bereich puffert. Es läßt sich eine Chlordioxid-Lösung mit einem $ClO^-$-Überschuß zur Vermeidung einer Chlorit-Rückbildung darstellen. Der Einsatz von Wasserstoffperoxid oder anderer Peroxide mit ihren unerwünschten Störungen kann ausgeschlossen werden. Der angesprochene Zusatz von Phosphorsäure bietet darüber hinaus noch den Vorteil, daß sie bei der Anwendung des Verfahrenserzeugnisses in metallischen Systemen ein Korrisionsinhibitor ist. Die erhaltene erfindungsgemäße wäßrige Chlordioxid-Lösung läßt sich mit besonderem Vorteil zur Trink- und Brauchwasserdesinfektion und zur Desinfektion von Schwimmbadwasser heranziehen. Ein weiteres Anwendungsfeld ist die Behandlung cyanidhaltiger Galvanikabwässer. Die Cyanidzerstörung mittels Chlordioxid führt über Dicyan zum Cyanat gemäß folgender Gleichung:

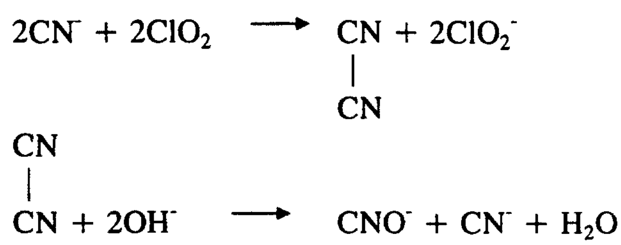

Das entstehende Chlorit kann in Gegenwart von Übergangsmetallen seinerseits mit Cyaniden zu Cyanat und Chlorid reagieren. Mit einer erfindungsgemäß hergestellten Chlordioxid-Lösung lassen sich auch Cyano-Komplexe zerstören, z.B.:

$$5[Cu(CN)_3]^{2-} + 7ClO_2 + 12^{-}OH \rightarrow 15CNO^- + 7Cl^- + 5Cu(OH)_2 + H_2O$$

Vorzugsweise wird die gebildete wäßrige Chlordioxid-Lösung vor ihrer Verwendung zur Zerstörung von Cyaniden und Cyano-Metallkomplexen auf einen pH-Wert von etwa 9 bis 10 gebracht. Durch diese Maßnahme wird die Entstehung von Blausäure sicher ausgeschlossen.

Die Cyanidentgiftung erfolgt mit der erfindungsgemäßen Chlordioxid-Lösung schneller und besser als bei reinem Chlorbleichlaugeeinsatz, wozu auf Cocheci, V., Taubert, R. und Martin, a., Removal of Cyanide from wastewater, Bull Stiint, Teh. Inst. Politeh. Timisoara 1969, 14(2) S. 497-502, verwiesen sei. Die erfindungsgemäß erhaltene Chlordioxid-Lösung läßt sich auch zur CSB/BSB-Reduzierung und zur Komplexbrechung von Metallkomplexen heranziehen, um die Metalle im Anschluß daran zu fällen bzw. mittels Ionenaustausch/Sorptionsverfahren aus dem Abwasser zu entfernen.

Nachfolgend soll die Erfindung anhand von Beispielen noch näher erläutert werden.

Beispiel 1

In einem Strömungsrohrreaktor werden bei einer Reynolds-Zahl von mehr als 2.300 in einem Volumenstrom von 8,33 * $10^{-5}$ $m^3$/s von Wasser 0,08 ml/s einer hypochloritionenhaltigen wäßrigen Lösung (78,49 g $OCl^-$/l) und 0,56 ml/s einer Orthophosphorsäure (145,35 g/l) durch zwei gegenüberliegende Impfstellen eingegeben. Nach Vermischung der beiden Komponenten in der turbulenten wäßrigen Strömung wird ein Redoxpotential (Platinelektrode mit einer Silber/Silberchloridelektrode) von ca. 1.200 mV gemessen. Der pH-Wert dieser Lösung liegt bei 2,5. In diesen Volumenstrom werden 0,043 ml/s einer chlorithaltigen wäßrigen Lösung (388,08g $ClO_2^-$/l) durch eine Impfstelle unmittelbar vor einem Strömungsreaktor eingegeben. Das Reaktionsgemisch tritt danach in den Rohrreaktor ein und hat darin eine Verweilzeit von ca. 32 s. In dieser Zeit setzt sich das Hypochlorit mit dem Chlorit quantitativ zu Chlordioxid und Chlorid um.

Nach Austritt der Produkte aus dem Reaktor werden mittels einer weiteren Impfstelle 0,318 ml/s der oben angegebenen Chlorbleichlauge in den Volumenstrom geimpft. Die Lösung weist nun einen pH-Wert von 3,65 und das

Redoxpotential einen Wert von etwa 1.051 mV auf. Diese Zubereitung (0,2 g/l Chlordioxid und 0,3 g/l HOCl) wird in einem Vorratsgefäß aufgefangen und kann von hier in ein trinkwasserführendes System dosiert werden.

Beispiel 2

Es wird hier wie in Beispiel 1 vorgegangen. Jedoch wird nach dem Rohrreaktor anstelle der Chlorbleichlauge eine redoxinaktive Base zudosiert, so daß der pH-Wert des Reaktionsgemisches im Vorratsbehälter zwischen pH 9 und pH 10 liegt. Eine solche alkalisch eingestellte Oxidationsmittel-Lösung wird in Systemen eingesetzt in denen ein alkalisches Milieu bevorzugt wird, z.B. wenn Cyano-Komplexe zerstört und die Schwermetallionen gleichzeitig als Hydroxid-Komplexe gefällt werden sollen. Es ist festzuhalten, daß die Chlordioxid-Lösung erst vor ihrem Einsatz auf einen hohen pH-Wert gebracht wird. Die Herstellung der Chlordioxid-Lösung erfolgt erfindungsgemäß bei einem gepufferten schwach sauren pH-Wert, wodurch der Vorteil gegeben ist, daß die Umsetzung quantitativ erfolgt und keine Chlorat-Bildung auftritt.

**Patentansprüche**

1. Verfahren zur Herstellung von wäßrigen Chlordioxid-Lösungen durch Oxidation von Chlorit mit Oxosäure und/oder Oxosäure-Anionen geeigneten Redoxpotentials in einem gepufferten wäßrigen Medium, **dadurch gekennzeichnet, daß** man eine saure, wäßrige Lösung A mit einem pH-Wert von etwa 5 oder weniger, die die Oxosäure und/oder Oxosäure-Anionen enthält, herstellt, und die saure wäßrige Lösung A zur Bildung von Chlordioxid mit einer wäßrigen Chlorit-Lösung B mischt, wobei sich in der Reaktionsmischung ein pH-Wert von unter 6,95 einstellt, der durch ein darin enthaltenes pufferndes System stabilisiert ist, wobei als Oxosäuren und/oder Oxosäure-Anionen Hypochlorige Säure/Hypochlorit verwendet werden und/oder die Reaktionsmischung zur Oxidation des Chlorits mit einem kontinuierlich geführten Reaktionsreaktor durchgeführt wird.

2. Verfahren nach Anspruch 1, **dadurch gekennzeichnet, daß** der pH-Wert der sauren wäßrigen Lösung A auf 1 bis etwa 5 eingestellt wird.

3. Verfahren nach Anspruch 1 oder 2, **dadurch gekennzeichnet, daß** der sauren wäßrigen Lösung A ein pufferndes System einverleibt wird.

4. Verfahren nach Anspruch 3, **dadurch gekennzeichnet, daß** der sauren wäßrigen Lösung A als pufferndes System eine schwache Säure mit geeignetem $pK_s$-Wert einverleibt wird.

5. Verfahren nach Anspruch 4, **dadurch gekennzeichnet, daß** die schwache Säure gleichzeitig zum Ansäuern der wäßrigen Lösung A und zur Einverleibung des puffernden Systems zugegeben wird.

6. Verfahren nach Anspruch 4 oder 5, **dadurch gekennzeichnet, daß** als schwache Säure Orthophosphorsäure eingesetzt wird.

7. Verfahren nach Anspruch 6, **dadurch gekennzeichnet, daß** die saure wäßrige Lösung A durch Ansäuern einer Lösung von Alkali- und/oder Erdalkalisalzen der Hypochlorigen Säure und/oder der Peroxomonoschwefelsäure erhalten wird.

8. Verfahren nach mindestens einem der vorhergehenden Ansprüche, **dadurch gekennzeichnet, daß** als Lösung B eine wäßrige Lösung von Alkali- und/oder Erdalkalisalzen der chlorigen Säure verwendet wird.

9. Verfahren nach mindestens einem der vorhergehenden Ansprüche, **dadurch gekennzeichnet, daß** das Chlorit mit dem System Oxosäuren und/oder Oxosäure-Anionen in einem molaren Verhältnis, bezogen auf Redox-Äquivalente, von 1,1:1 bis 0,9:1, insbesondere etwa 1:1 umgesetzt wird.

10. Verfahren nach mindestens einem der vorhergehenden Ansprüche, **dadurch gekennzeichnet, daß** die Konzentration des Systems Oxosäuren und/oder Oxosäure-Anionen in der sauren wäßrigen Lösung A durch Messen des Redox-Potentials bestimmt und die Mengen von Lösung A und Lösung B entsprechend abgeglichen werden.

11. Verfahren nach mindestens einem der vorhergehenden Ansprüche, **dadurch gekennzeichnet, daß** in dem Reaktor zur weitgehenden Oxidation von Chlorit mit dem System Oxosäuren und/oder Oxosäure-Anionen eine Bodenstein-Zahl von 0 bis etwa 500, insbesondere zwischen etwa 5 und 40 eingehalten wird.

**12.** Verfahren nach Anspruch 11, **dadurch gekennzeichnet, daß** als Reaktionsreaktor ein Strömungsrohr verwendet wird.

**13.** Verfahren nach mindestens einem der vorhergehenden Ansprüche, **dadurch gekennzeichnet, daß** das Verfahren in einem Reaktionsreaktor durchgeführt wird, in dem eine Reynolds-Zahl von > 2.300 eingestellt ist.

**14.** Verfahren nach Anspruch 13, **dadurch gekennzeichnet, daß** in dem Strömungsrohr turbulenzerzeugende Elemente eingebaut sind.

**15.** Verfahren nach mindestens einem der vorhergehenden Ansprüche, **dadurch gekennzeichnet, daß** der gebildeten wäßrigen Chlordioxid-Lösung zusätzlich eine wäßrige Hypochlorit-Lösung, insbesondere Natriumhypochlorit-Lösung, zur Bildung Hypochloriger Säure zugesetzt wird.

## Claims

**1.** Process for the production of aqueous chlorine dioxide solutions through oxidation of chlorite with oxo acids and/or oxo acid anions having a suitable redox potential in a buffered aqueous medium, **characterized in that** an acidic aqueous solution A is produced which has a pH of about 5 or less and contains the oxo acids and/or oxo acid anions, and the acidic aqueous solution A is mixed with an aqueous chlorite solution B to form chlorine dioxide, wherein a pH of less than 6.95 is adjusted in the reaction mixture, this pH-value being stabilized by a buffering system contained therein, wherein hypochlorous acid/hypochlorite are used as oxo acids and/or as oxo acid anions and/or the reaction mixture for oxidation of the chlorite is carried out with a continuous operation reaction reactor.

**2.** Process according to claim 1, **characterized in that** the pH of the acidic aqueous solution A is adjusted to 1 to approx. 5.

**3.** Process according to claim 1 or 2, **characterized in that** a buffering system is incorporated into the acidic aqueous solution A.

**4.** Process according to claim 3, **characterized in that** a weak acid with a suitable $pK_s$-value is incorporated in the acidic aqueous solution A as a buffering system.

**5.** Process according to claim 4, **characterized in that** the weak acid is added to the aqueous solution A for acidifying and for incorporating the buffering system simultaneously.

**6.** Process according to claim 4 or 5, **characterized in that** orthophosphoric acid is used as a weak acid.

**7.** Process according to claim 6, **characterized in that** the acidic aqueous solution A is obtained by acidifying a solution of alkaline salts and/or alkaline-earth salts of hypochlorous acid and/or of permonosulfuric acid.

**8.** Process according to at least one of the preceding claims, **characterized in that** an aqueous solution of alkaline salts and/or alkaline-earth salts of chlorous acid are/is used as solution B.

**9.** Process according to at least one of the preceding claims, **characterized in that** the chlorite is reacted with the system of oxo acids and/or oxo acid anions in a molar ratio with respect to redox equivalents of 1.1:1 to 0.9:1, particularly approx. 1:1.

**10.** Process according to at least one of the preceding claims, **characterized in that** the concentration of the system of oxo acids and/or oxo acid anions in the acidic aqueous solution A is determined by measuring the redox potential and the quantities of solution A and solution B are correspondingly balanced.

**11.** Process according to at least one of the preceding claims, **characterized in that** a Bodenstein number from 0 to approx. 500, especially between approx. 5 and 40, is maintained in the reactor for extensive oxidation of chlorite with the system of oxo acids and/or oxo acid anions.

12. Process according to claim 11, **characterized in that** a flow-tube is used as reaction reactor.

13. Process according to at least one of the preceding claims, **characterized in that** the process is carried out in a reaction reactor in which a Reynold number greater than 2,300 is adjusted.

14. Process according to claim 13, **characterized in that** turbulence-generating elements are installed in the flow-tube.

15. Process according to at least one of the preceding claims, **characterized in that** an aqueous hypochlorite solution, especially sodium hypochlorite solution, is additionally added to the formed aqueous chlorine dioxide solution in order to form hypochlorous acid.

**Revendications**

1. Procédé pour la fabrication de solutions aqueuses de dioxyde de chlore par oxydation de chlorite avec de l'oxyacide et/ou des anions d'oxyacide ayant un potentiel d'oxydoréduction approprié dans un milieu aqueux tamponné, **caractérisé en ce que** l'on fabrique une solution acide aqueuse A avec un pH d'environ 5 ou moins, qui contient l'oxyacide et/ou les anions d'oxyacide, et **en ce que** l'on mélange la solution acide aqueuse A avec une solution aqueuse de chlorite B pour former le dioxyde de chlore, et selon lequel un pH inférieur à 6,95 s'établit dans le mélange de réaction et se stabilise à l'aide d'un système tampon contenu dedans, on utilise comme oxyacides et/ou anions d'oxyacide de l'acide hypochloreux / de l'hypochlorite et/ou on réalise le mélange de réaction pour l'oxydation du chlorite avec un réacteur de réaction piloté en continu.

2. Procédé selon la revendication 1, **caractérisé en ce que** le pH de la solution acide aqueuse A est réglé entre 1 et environ 5.

3. Procédé selon la revendication 1 ou 2, **caractérisé en ce qu'**un système tampon est incorporé dans la solution acide aqueuse A.

4. Procédé selon la revendication 3, **caractérisé en ce que** le système tampon incorporé dans la solution acide aqueuse A est un acide faible ayant une valeur $pK_s$-appropriée.

5. Procédé selon la revendication 4, **caractérisé en ce que** l'acide faible est ajouté en même temps pour acidifier la solution acide aqueuse A et pour incorporer le système tampon.

6. Procédé selon la revendication 4 ou 5, **caractérisé en ce que** l'acide faible utilisé est un acide orthophosphorique.

7. Procédé selon la revendication 6, **caractérisé en ce que** la solution acide aqueuse A est obtenue par acidification d'une solution de sels alcalins et/ou de sels alcalino-terreux de l'acide hypochloreux et/ou de l'acide peroxosulfurique.

8. Procédé selon au moins l'une des revendications précédentes, **caractérisé en ce que** l'on utilise comme solution B une solution aqueuse de sels alcalins et/ou de sels alcalino-terreux de l'acide chloreux.

9. Procédé selon au moins l'une des revendications précédentes, **caractérisé en ce que** le chlorite est décomposé avec le système oxyacides et/ou anions d'oxyacide selon un rapport molaire, rapporté aux équivalents d'oxydoréduction, compris entre 1,1 / 1 et 0,9 / 1, en particulier d'environ 1 / 1.

10. Procédé selon au moins l'une des revendications précédentes, **caractérisé en ce que** la concentration du système oxyacides et/ou anions d'oxyacide dans la solution acide aqueuse A est déterminée en mesurant le potentiel d'oxydoréduction et **en ce que** les quantités de solution A et de solution B sont équilibrées de manière correspondante.

11. Procédé selon au moins l'une des revendications précédentes, **caractérisé en ce qu'**un indice de pierre de sole compris entre 0 et environ 500, en particulier entre environ 5 et 40, est maintenu dans le réacteur pour l'oxydation poussée du chlorite avec le système oxyacides et/ou anions d'oxyacide.

12. Procédé selon la revendication 11, **caractérisé en ce que** l'on utilise un tube d'écoulement comme réacteur de

réaction.

**13.** Procédé selon au moins l'une des revendications précédentes, **caractérisé en ce que** le procédé est réalisé dans un réacteur de réaction dans lequel est réglé un nombre de Reynolds > 2.300.

**14.** Procédé selon la revendication 13, **caractérisé en ce que** des éléments générateurs de turbulences sont insérés dans le tube d'écoulement.

**15.** Procédé selon au moins l'une des revendications précédentes, **caractérisé en ce qu'**une solution aqueuse d'hypochlorite, en particulier une solution d'hypochlorite de sodium, est ajoutée en plus à la solution aqueuse de dioxyde de chlore formée pour former l'acide hypochloreux.

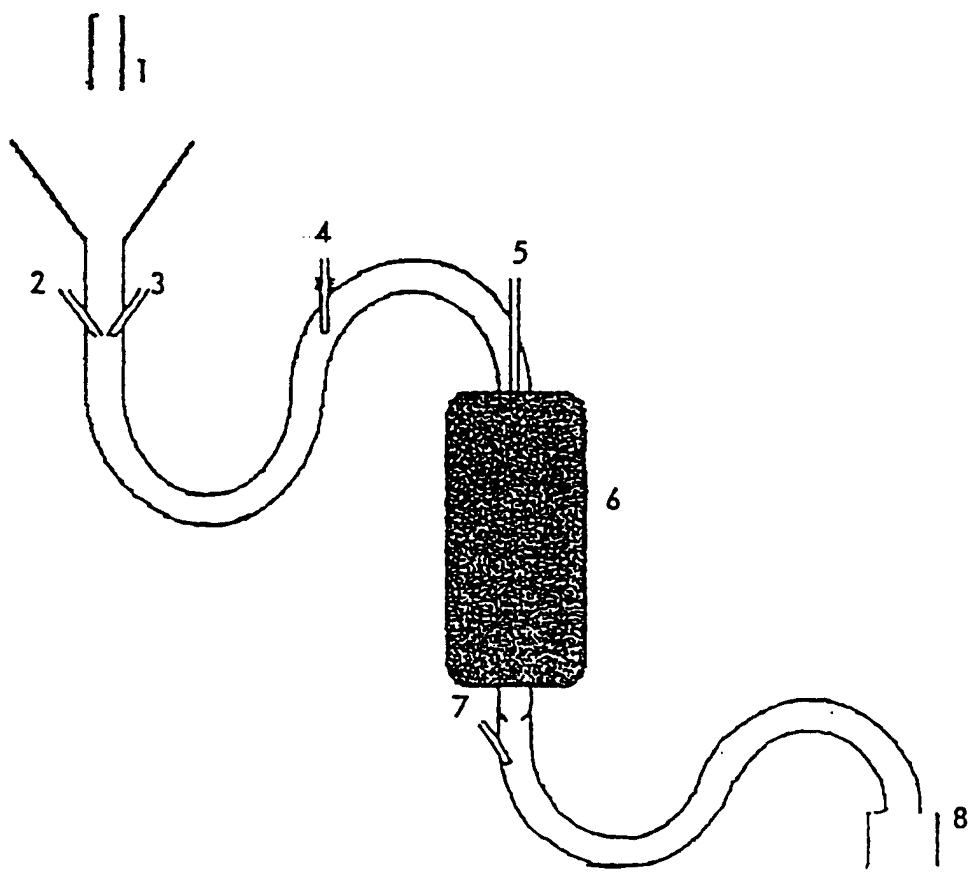


FIGUR 1